# EUROPEAN PATENT APPLICATION

(11) **EP 1 075 788 A1**
(43) Date of publication of application: **14.02.2001**
(21) Application number: 99115144.0
(22) Date of filing: 11.08.1999
(51) Int. Cl.: A01K 63/04, A01K 61/00, C02F 1/24, C02F 7/00

(54) **Operative unit for fish larvae breeding**

(71) Applicant: FARM FISH S.r.l., I-40125 Bologna (IT)
(72) Inventor: Valfrido, Angiolin, 30010 Campagna Lupia (VE) (IT)
(74) Representative: Dall'Olio, Giancarlo

(57) **Abstract**

The operative unit for fish larvae breeding includes a basin (1), containing a mass of water (3) and a depuration and oxygenation device (10), floating in the mass of water (3). The depuration and oxygenation device (10) includes a substantially vertical rear module (11), partially sunk and aimed at releasing, at a predetermined depth, a continuous flow of air for facilitating the oxygenation of phosphor compounds present in said mass of water (3) and for simultaneous increase of the water oxygenation, as well as for creating continuous circulation of water inside the basin (1). The depuration and oxygenation device (10) includes also a substantially horizontal fore module (13), partially introduced into the rear module (11) for collecting, on the surface of water, the flow of air released by the rear module (11) and the oxygenated phosphor compounds (5).

## Description

The present invention relates to breeding of different fish types used for food.

In particular, the present invention concerns a new operative unit for breeding fish larvae, i.e. fish in their very first development stage, in water basin.

A great quantity of fish consumed nowadays, in particular vintage kinds like bass or gilthead bream, comes from industrially organized fish farms.

Adult fish are usually grown in closed basins, natural or artificially made, or inside special very big cages anchored in open sea, according to techniques known to those skilled in the art.

Young fish are introduced into basins and withdrawn therefrom when grown to dimensions which are commercially more advantageous. Then, they are immediately sent to usual distribution channels.

In order to guarantee a continuous substitution of withdrawn fish, as well as of fish dead before having completed the development cycle, it is necessary to guarantee an efficient and continuous production of young fish to introduce in breeding farms.

The first stage of the production cycle is fish larvae breeding, i.e. breeding of specimens in the first stage of vital cycle, immediately after the roe opening.

This development stage is surely the most critical, since the larvae are extremely delicate and their breeding is difficult.

The fish larvae well-being, and consequently, their growth rate and ability to face successfully subsequent growth stages, depend on the characteristics of the water environment, in which they are grown.

The water temperature, oxidation grade, its cleanliness and limpidity, as well as proper concentrations of nutritive substances, are particularly important, specially for sea fish larvae.

Moreover, the larvae require very dynamic environment, in which the waters circulate continuously but not violently, so as to have better access to the nutritive substances.

Obviously, the larvae must be kept in closed and not too big rooms, so that the above mentioned conditions can be better defined and controlled.

Actually, the fish larvae are bred in special basins, preferably containing some cubic meters of water.

Water inside such basins is kept in continuous circulation and a certain exchange thereof is ensured, so that its conditions do not go below the larvae tolerance level.

On the other hand, the quality of water introduced into the basins, specially for sea fish breeding, must be absolutely available on the spot.

Therefore, specially near highly populated coasts, water includes high concentrations of organic substances, particularly of phosphorus and nitrogen compounds (phosphates and nitrates).

Such substances cause a well known eutrophication phenomenon, which means an abnormal development of these substances primary users (particularly some types of algae) and a consequent abnormal use of oxygen dissolved in water.

The eutrophication phenomenon continues also after the water had been introduced into the breeding basins and provokes a degradation of the fish larvae breeding environment.

Due to the above mentioned elements, it is necessary to use small basins and to avoid high volumetric density of larvae thereinside.

Actually, it is very difficult and expensive to clean and oxygenate the water without damaging larvae contained therein.

On the other hand, the phenomena caused by eutrophication are efficiently overcome in other environments, like basins for adult specimens, by suitable devices for water organic neutralization and oxygenation.

For instance, the European Patent No. 478.605, owned by the same Applicant, discloses a simple and efficient device, floating on the water, for neutralization of organic compounds, which are the main cause of eutrophication, and particularly the phosphor compounds.

The device, if floating freely in a water basin, can collect the above mentioned organic compounds from the water surface and convey them to a special container, without doing any harm to the organisms kept in the basin.

The phosphor compounds are separated from water by a continuous and uniform flow of air, and collected as foam, in a collecting chamber. The flow of air, and therefore also the foam, are then conveyed toward a suitable tub-like container situated in the floating part of the device.

The present invention has been evolved with the object of proposing an operative unit for fish larvae breeding, which ensures best breeding conditions even with high density of larvae and in big basins.

The above mentioned object is obtained in accordance with the contents of the claims.

The characteristic features of the invention will be pointed out in the following description, with a particular reference to enclosed drawings, in which:
- Figure 1 shows the proposed operative unit for fish larvae breeding;
- Figure 2 is a perspective view of the depuration and oxygenation device, connected to the operative unit of Figure 1;
- Figure 3 is a schematic view of the device of Figure 2, as seen in longitudinal section;
- Figure 4 shows the proposed operative unit of Figure 1 with the depuration device fastened to a basin edge.

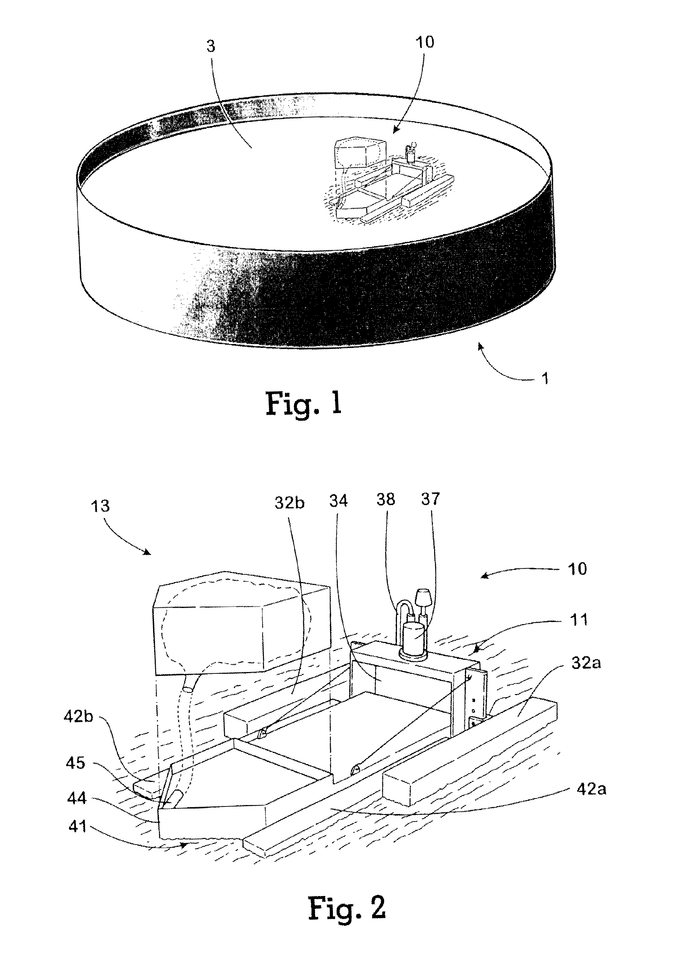

With reference to Figure 1, the reference numeral 1 generally designates a cylindrical basin, containing a certain quantity of water 3, which is fitted for breeding fish larvae.

Obviously, the fish larvae are present in the water 3 with a predetermined volumetric density.

According to a first embodiment, a depuration and oxygenation device 10, produced according to the above mentioned European Patent No. 478.605, floats freely in the mass of water 3.

The depuration and oxygenation device 10 will be now briefly described, so that the present invention will be understood better.

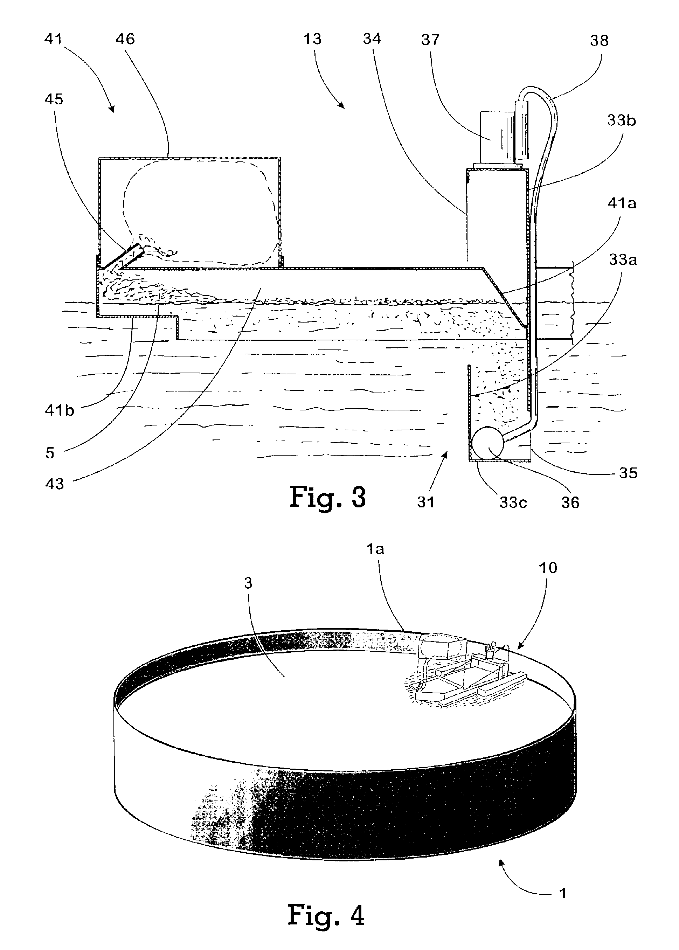

The depuration and oxygenation device 10 (see also Figure 2 and 3) includes a substantially vertical rear module 11, partially sunk in the water.

The rear module 11 includes an approximately parallelepiped housing 31, disposed vertically and equipped, on its fore surface 33a, with a window 34, also partially sunk in the water.

The lower part of the rear surface 33b of the housing 31 features an opening 35, completely sunk in the water.

A first couple of floats 32a, 32b, aimed at maintaining the housing 31 in the desired immersion conditions, are fastened at the sides of the same housing 31.

An air diffuser 36, aimed at releasing a continuous flow of air into water, is situated on the bottom 33c of the housing 31.

A blowing unit 37, situated in the upper part of the housing 31 and aimed at generating the flow of air, is connected to the air diffuser 36 by a pipe 38.

The depuration and oxygenation device 10 includes also a substantially horizontal fore module 13, partially introduced into the rear module 11 through the window 34.

The fore module 13 substantially includes a tub-like container 41, turned upside down and equipped with a second couple of floats 42a, 42b, which are situated on both sides thereof.

The rear end 41a of the tub-like container 41 is fastened to the housing 31 in a position close to the water surface.

Thus, the tub-like container 41 defines a collection chamber 43, closed and partially floating, which is aimed at collecting the flow of air released by the air diffuser 36 and the oxygenated phosphor compounds 5, which are gradually accumulated on the water surface as foam.

The fore part 41b of the tub-like container 41 has the form of a cusp 44 and the upper part of the cusp 44 features a connecting tube 45.

The connecting tube 45 leads to the inside of an outer casing 46, situated in the upper floating part of the tub-like container 41 and aimed at collecting the oxygenated phosphor compounds 5 conveyed through the connecting tube 45.

While working, the depuration and oxygenation device 10 is activated inside the basin 1 for fish larvae breeding to eliminate continuously the phosphor compounds 5 exceeding in the mass of water 3.

Moreover, the continuous flow of air increases the quantity of oxygen dissolved in the water.

Finally, the push caused by the flow of air to the water therearound, makes the water inside the housing 31 circulate, and shortly the whole mass of water 3 circulates.

According to another embodiment of the present invention, the depuration and oxygenation device 10 is anchored to the edge of the basin 1.

In this case, the depuration and oxygenation device 10 can work without some or even all floats.

It has been noticed that this arrangement does not effect substantially the efficiency, and makes the access to the depuration and oxygenation device 10 for maintenance and control operations easier.

The depuration and oxygenation device 10 associated to the basin 1 for fish larvae breeding has appeared surprisingly efficient in creating and maintaining best life conditions for the fish larvae bred in the same basin 1, which consequently allows to obtain larvae of very high quality and high survival probability.

Another advantage of the present invention derives from the fact that depuration and oxygenation device 10 works well also in big quantities of water, thus allowing its use in breeding basins 1, which are bigger than usually used, in particular containing more than 60 m³ of water.

## Claims

1. Operative unit for fish larvae breeding, including:
a basin (1), containing a mass of water (3) suited to fish larvae breeding and at least one depuration and oxygenation device (10), situated inside said mass of water (3), said depuration and oxygenation device (10) including:
a substantially vertical rear module (11), partially sunk and aimed at releasing, at a predetermined depth, a continuous flow of air for facilitating the oxygenation of phosphor compounds present in said mass of water (3) and for simultaneous increase of the water oxygenation;
one substantially horizontal fore module (13), partially introduced into said rear module (11) for collecting, on the surface of water, the flow of air released by said rear module (11) and said oxygenated phosphor compounds (5).

2. Operative unit, according to claim 1, characterized in that said rear module (11) includes:
an approximately parallelepiped housing (31), disposed vertically and equipped, on its fore surface (33a), with a window (34), which is to be partially sunk and into which said fore module (13) is to be introduced, said housing (31) being equipped, on its rear surface (33b) with an opening (35), which is aimed at being completely sunk;
a first couple of floats (32a,32b), aimed at maintaining said housing (31) in the desired immersion conditions;
an air diffuser (36), situated on the bottom (33c) of the housing (31) and aimed at releasing said flow of air into water;
at least one blowing unit (37), situated in the upper part of the housing (31) and connected to said air diffuser (36) by a pipe (38) for generating said flow of air.

3. Operative unit, according to claim 1, characterized in that said fore module (13) includes:
a tub-like container (41), turned upside down and equipped with a second couple of floats (42a,42b), which are situated on both sides thereof, with the rear end (41a) of said tub-like container (41) fastened to said rear module (11) in a position close to the water surface, said tub-like container (41) defining a collection chamber (43), closed and partially floating, with the fore part (41b) of said tub-like container (41) having the form of a cusp (44), whose upper part features at least one connecting tube (45) aimed at allowing said flow of air and oxygenated phosphor compounds (5) to pass, said tub-like container (41) being also equipped with at least one outer casing (46), situated in the upper floating part of said tub-like container (41) and aimed at collecting said oxygenated phosphor compounds (5).

4. Operative unit, according to claim 1, characterized in that said depuration and oxygenation device (10) floats freely on the surface of said basin (1).

5. Operative unit, according to claim 1, characterized in that said depuration and oxygenation device (10) is fastened to the edge of said basin (1).
